# EUROPÄISCHE PATENTANMELDUNG

(11) **EP 2 189 761 A1**
(43) Veröffentlichungstag der Anmeldung: **26.05.2010**
(21) Anmeldenummer: 08020207.0
(22) Anmeldetag: 20.11.2008
(51) Int. Cl.: G01D 5/245, G01D 5/347

(54) **Vorrichtung zur Bestimmung der Winkelposition**

(71) Anmelder: Carl Freudenberg KG, 69469 Weinheim (DE)
(72) Erfinder: Feurer, Georg, 69493 Hirschberg (DE)

(57) **Zusammenfassung**

Vorrichtung zur Bestimmung der Winkelposition (1) eines rotierenden Maschinenelementes (2), umfassend eine Codespur (3), die dem Maschinenelement (2) zugeordnet ist und durch Sensorelemente (4) auslesbar ist, wobei die Codespur (3) mit einem Codemuster (5) in Form eines Single-Track-Gray-Codes versehen ist, wobei dem Maschinenelement (2) eine Taktspur (6) zugeordnet ist, welche durch Sensorelemente (4) auslesbar ist.

## Beschreibung

Die Erfindung betrifft eine Vorrichtung zur Bestimmung der Winkelposition eines rotierenden Maschinenelementes, umfassend eine Codespur, die dem Maschinenelement zugeordnet ist und durch Sensorelemente auslesbar ist, wobei die Codespur mit einem Codemuster in Form eines Single-Track-Gray-Codes versehen ist.

### Technisches Gebiet

### Stand der Technik

Aus der GB 2 226 720 A ist eine Vorrichtung zur Positions- oder Winkelbstimmung bekannt, bei der eine Codespur vorgesehen ist, die auf einem Single-Track-Gray-Cade basiert. Ein Single-Track-Gray-Code ist ein binäres Codemuster auf einer Codespur, welches beispielsweise magnetisch durch Nord- und Südpole oder beispielsweise optisch durch ein Lochmuster gebildet ist. Diese Codespur wird durch eine Anzahl voneinander beabstandeter Sensorelemente ausgelesen, wobei den Sensorelementen in Abhängigkeit des Codemusters zwei Pegel zugeordnet werden. Die Besonderheit des Single-Track-Gray-Codes ist, dass das Codemuster dabei so ausgebildet ist, dass während des Verschiebens oder des Verdrehens des Codemusters relativ zu den Sensorelementen immer nur ein einziges Sensorelement einen Pegelwechsel, der aus einer Änderung des Codemusters der Codespur resultiert, durchführt. Der Pegel aller Sensorelemente kann eindeutig einer Lage oder einer Winkellage zugeordnet werden, so dass mit einer einzigen Single-Track-Gray-Code-codierten Codespur eine Absolutpositions- oder Absolutwinkelbestimmung möglich ist. Dabei wird jedem Sensorelement aufsteigend eine Zahl, gebildet nach einer geometrischen Reihe mit der Rechenvorschrift aᵢ₊₁=2aᵢ, zugeordnet, so dass den einzelnen benachbarten Sensorelementen Zahlwörter beginnend mit 1 und aufsteigend 2, 4, 8, 16, ... zugeordnet werden. Multipliziert mit dem binären Wert 0 oder 1, welcher jedem Sensorelement beim Auslesen der Codespur zugeordnet wird, ergibt sich ein digitales Zahlwort, welchem wiederum ein bestimmter Winkel zugeordnet ist. So ist bereits beim Start, ohne jede Verschiebung oder Verdrehung die Angabe eines Absolutwinkels möglich. Ein besonderer Vorteil des Single-Track-Gray-Codes ergibt sich dadurch, dass stets nur an einem Sensorelement und nicht an mehreren Sensorelementen gleichzeitig ein Pegelwechsel detektiert wird. Im Gegensatz zu anderen Codespuren, bei dem gleich mehrere Sensorelemente zur gleichen Zeit einen Pegelwechsel detektieren. Hier kann die Messungenauigkeit der Sensorelemente zu einer starken Abweichung des gemessenen vom tatsächlichen Winkel führen. Insgesamt ergeben sich mit dem Single-Track-Gray-Code ein robustes Signal und eine hohe Fehlertoleranz bei der Winkel- oder Positionsbestimmung. Nachteilig sind hohe Anforderungen an die Fertigungsgenauigkeit und Einflüsse durch nicht ideal verhaltene Magnetfelder auf der Codespur. Abweichungen ergeben sich insbesondere auch aus den Randeinflüssen bei stark differendierenden Pollängen und auch Abweichungen durch dynamisches Verhalten der Sensorelemente. Insgesamt kann mit einer Single-Track-Gray-Code-codierten Winkelmesseinrichtung eine Genauigkeit von beispielsweise 1° erreicht werden. Eine derartige Genauigkeit ist allerdings für Anwendungen im Automobilbau, insbesondere für Kurbelwellen und für Lenkgetriebe oder auch für elektronische Sicherheitssysteme nicht ausreichend.

### Darstellung der Erfindung

Der Erfindung liegt die Aufgabe zugrunde, die vorbeschriebene Vorrichtung zur Bestimmung der Winkelposition so zu verbessern, dass sich die Genauigkeit in der Winkelmessung verbessert.

Diese Aufgabe wird mit den Merkmalen von Anspruch 1 gelöst. Auf vorteilhafte Ausgestaltungen nehmen die Unteransprüche Bezug.

Zur Lösung der Aufgabe ist dem Maschinenelement eine Taktspur zugeordnet, welche durch Sensorelemente auslesbar ist. Die Taktspur ist als zusätzliche Spur neben der Codespur und benachbart zu dieser auf dem Maschinenelement angeordnet. Die Codespur ist erfindungsgemäß als Single-Track-Gray-Code ausgebildet, der ausschließlich auf einer Spur, nämlich der Codespur angeordnet ist. Die Taktspur ist **dadurch gekennzeichnet, dass** sie sich aus Taktelementen mit gleicher Länge zusammensetzt. So können beispielsweise abwechselnd Nord- und Südpole mit jeweils der gleichen Länge nebeneinander auf der Taktspur angeordnet sein. Eine derartige Taktspur kann mit einer sehr hohen Genauigkeit gefertigt werden. Des Weiteren ist die Abweichung durch magnetische Randeinflüsse sehr klein und darüber hinaus auch konstant. Im Ergebnis kann eine derartige symmetrische Taktspur durch ein Sensorelement mit einer Genauigkeit von 0,1° ausgelesen werden. Beim Start der Vorrichtung zur Winkelbestimmung ergibt sich durch die an den Sensorelementen der Codespur anliegenden Pegel sofort ein bestimmter Winkel, der jedoch mit einer höheren Messungenauigkeit behaftet ist. Wird jedoch die Vorrichtung so weit verdreht, dass sich auch bei dem der Taktspur zugeordneten Sensorelement der Pegel verändert, kann der etwas ungenaue Wert des durch die Codespur bestimmten Winkel korrigiert werden, so dass der Absolutwinkel sehr genau, mit einer Genauigkeit von 0,1° oder besser bestimmt werden kann. Ein genauer Wert für den Winkel des Maschinenelementes kann insbesondere dann festgestellt werden, wenn in einer Auslesesoftware zunächst ein Flankenwechsel im Pegel des der Taktspur zugeordneten Sensorelementes abgewartet wird und in Anschluss daran die an den Sensorelementen anliegenden Pegel ausgelesen werden und das sich aus den Pegeln der Sensorelemente ergebende Zahlwort mit einem in einer Tabelle gespeicherten Referenzzahlwort verglichen wird, welchem wiederum ein Absolutwinkel zugeordnet ist.

Das Codemuster der Codespur kann aus Codestreifen unterschiedlicher Länge zusammengesetzt sein. Der Single-Track-Gray-Code besteht aus einem auslesbaren Codemuster, wobei das Codemuster so ausgebildet sein muss, dass bei einer Verdrehung stets nur ein einziges Sensorelement gleichzeitig seinen Pegel ändert. Dazu wird das Codemuster aus Codestreifen unterschiedlicher Länge zusammengesetzt. Die Sensorelemente, die das Codemuster auslesen, sind gleichmäßig zueinander beabstandet über den kompletten Umfang oder über einen Teil des Umfangs verteilt.

Die Codestreifen können sich aus digitalisierbaren Codeelementen gleicher Länge zusammensetzen, wobei die Codeelemente in zwei voneinander unterscheidbaren Zuständen bringbar sind. Dazu wird der Codestreifen in einzelne Codeelemente aufgeteilt, die jeweils die gleiche Länge aufweisen. Es werden zwei verschiedene Codeelemente vorgesehen und auf der Codespur angeordnet. Unterscheidbare Codeelemente sind beispielsweise Codeelemente mit Erhebungen und solche mit Vertiefungen oder Codeelemente mit einem magnetischen Nordpol und solche mit einem magnetischen Südpol. Möglich ist auch eine zahnradähnliche Geometrie mit Zähnen oder Zahnlücken oder auch ansteigenden und abfallenden Flanken. In einer weiteren Ausgestaltung ist das Codeelement als Lochmuster ausgebildet ist. Für den Single-Track-Gray-Code werden mehrere gleiche Codeelemente nebeneinander angeordnet, so dass sich ein Codemuster ergibt, bei dem stets nur ein Sensorelement zur gleichen Zeit einen Wechsel zwischen den zwei unterschiedlichen Codeelementen detektiert. Die zuvor beschriebenen Codeelemente werden mittels induktiver, magnetfeldsensitiver oder optischer Sensorelementen ausgelesen und anschließend digitalisiert. Die Anzahl der Codeelemente ist abhängig von der Anzahl der Sensorelemente, die die Codeelemente der Codespur auslesen. Werden 5 Sensorelemente vorgesehen, so ergibt sich bei einem Single-Track-Gray-Code eine maximale Auflösung von 30 Schritten pro Umdrehung, entsprechend einer Winkelauflösung von 12°. Dementsprechend werden bei 5 Sensorelementen 30 Codeelemente vorgesehen. Diese 30 Codeelemente werden so zueinander angeordnet und zusammengefasst, dass sich 6 Codestreifen unterschiedlicher Länge ergeben. Werden 6 Sensorelemente vorgesehen, erhöht sich die Auflösung auf 60, entsprechend einer Winkelauflösung von 6°. Es ist auch möglich, das Sensorelement der Taktspur in die Winkelbestimmung einzubeziehen, wodurch die Auflösung um den Faktor 2 verbessert werden kann.

Die Codestreifen der Taktspur können jeweils die gleiche Anzahl von Codeelementen aufweisen und die Codestreifen können in einer alternierenden Folge angeordnet sein. Die Taktspur wir bevorzugt von einem einzigen Sensorelement ausgelesen, wobei jedem Codestreifen ein einziges Codeelement, entsprechend beispielsweise einem magnetischen Nord- oder Südpol, zugeordnet ist. Daraus ergibt sich ein symmetrisches Muster, welches besonders einfach und genau herstellbar ist und welches besonders einfach und mit sehr geringer Messungenauigkeit ausgelesen werden kann.

Die Anzahl der Codeelemente der Codespur kann der Anzahl der Codeelemente der Taktspur entsprechen oder die Anzahl der Codeelemente der Codespur kann ein ganzzahliges Vielfaches der Anzahl der Codeelemente der Taktspur sein oder die Anzahl der Codeelemente der Taktspur kann ein ganzzahliges Vielfaches der Anzahl der Codeelemente der Codespur sein: Bei jeder der vorbeschriebenen Anordnungen ist sicher gestellt, dass sich der Versatz zwischen den Übergängen zwischen den Codeelementen der Codespur und der Taktspur zueinander nicht ändert. Der Abstand eines Codeelementüberganges auf der Taktspur bleibt im Abstand immer konstant einem Codeelementübergang auf der Codespur zugeordnet. Jeder Pegelwechsel eines der Codespur zugeordneten Sensorelementes geht dabei mit stets gleichem Winkelversatz mit einem Pegelwechsel des der Taktspur zugeordneten Sensorelementes einher.

Die Codeelemente der Taktspur können gegenüber den Codeelementen der Codespur versetzt angeordnet sein. Bei einem Pegelwechsel, bei einem Codeelementübergang, den das Sensorelement detektiert, weist der gemessene Absolutwinkel einen Sprung in der Höhe der erreichbaren Auflösung auf. Durch den Versatz der Übergänge auf der Taktspur ist sicher gestellt, dass an jedem der Codespur zugeordneten Sensorelemente der richtige Pegel anliegt, bevor durch das der Taktspur zugeordnete Sensorelement ein Pegelwechsel detektiert wird, durch den die Messgenauigkeit des gemessenen Winkels verbessert wird. Da die Messgenauigkeit einer durch 5 Sensorelemente detektierten Codespur im Bereich von 1° liegt, sollte der Versatz vorteilhafterweise über 1° betragen, damit an jedem der Codespur zugeordneten Sensorelemente ein sicherer Pegel anliegt.

Der Versatz kann einer halben Länge eines Codeelementes entsprechen. Bei einem derartigen Versatz ergibt sich die größte Genauigkeit, da der Abstand zum vorderen und hinteren Codeelementübergang auf der Codespur jeweils gleich ist. Werden 30 Codeelemente auf der Codespur und auf der Taktspur vorgesehen, beträgt der Versatz in diesem Fall 6° in beide Richtungen.

Alternativ können die Codeelemente der Taktspur nicht versetzt angeordnet sein. Stattdessen kann das Sensorelement der Taktspur um das 0,5-fache, 1,5-fache, 2,5-fache,... der Länge eines Codeelementes gegenüber einem Sensorelement der Codespur versetzt angeordnet sein. Idealerweise werden der Versatz der Sensorelemente der Codespur zu den Sensorelementen der Taktspur und der Versatz der Codespur zur Taktspur so gewählt, dass ein Pegelwechsel auf der Taktspur mittig zwischen Pegelwechseln auf der Codespur liegt.

Die Taktspur kann eine größere Breite aufweisen als die Codespur. Die Aufgabe der Codespur ist es, die Detektion eines Absolutwinkels zu ermöglichen. Dabei kommt es nicht auf die Messgenauigkeit an, da sich die Messgenauigkeit durch die benachbart angeordnete Taktspur ergibt. Daher kann, insbesondere wenn es der Bauraum erfordert, die Codespur schmaler ausgebildet sein als die Taktspur. Die Taktspur soll möglichst exakt ausgelesen werden können, daher ist es vorteilhaft, diese Spur möglichst breit auszugestalten.

Zum Auslesen der Codespur und der Taktspur kann jeweils ein Sensor mit Sensorelementen vorgesehen sein, wobei der Sensor der der Codespur zugeordnet ist, mehrere Sensorelemente umfasst. Wie zuvor beschrieben, sind in einem vorteilhaften Sensor 5 Sensorelemente zusammen gefasst, wodurch sich eine Auflösung von 12° ergibt. Jedem Sensorelement wird ein Zahlwort gebildet aus der geometrischen Reihe zugeordnet, wodurch sich multipliziert mit dem binären Pegelwert des an dem Sensorelement anliegenden Pegels eine Zahl ergibt, die nach einem Tabellenvergleich einem Absolutwinkel zugeordnet werden kann.

Die der Taktspur zugeordneten Sensorelemente können ein anderes Messprinzip aufweisen als das der Codespur zugeordnete Sensorelement.

Bevorzugt weisen alle Sensorelemente ein magnetisches Messprinzip auf. So ist beispielsweise denkbar, der Codespur Sensorelemente mit einem Single-Hall-Messprinzip und der Taktspur Sensorelemente mit einem Differenzen-Hall-Messprinzip zuzuordnen. Ein Single-Hall-Sensor ist reagiert auf Konstantpegel und ist daher insbesondere geeignet, längere Codeelemente auszulesen. Ein Differenzen-Hall-Sensor ist unempfindlich bei konstanten Pegeln bei Nachbarspuren und ist daher nur wenig durch diese beeinflussbar.

Das der Taktspur zugeordnete Sensorelement kann als interpolierendes Sensorelement ausgebildet sein. Ein derartiges Sensorelement verbessert nochmals die Auflösung der Vorrichtung, da derartige Sensorelemente ein nahezu kontinuierliches mit der Verdrehung sich veränderndes Signal abgeben, welches durch eine Auswerteeinheit in nahezu sich kontinuierlich verändernde Winkelwerte umgesetzt werden kann. Ein interpolierendes Sensorelement gibt ein in Abhängigkeit des von der Taktspur empfangenen Pegels, beispielsweise dem sich verändernden Magnetfeldes einer magnetisierten Taktspur, statt diskreter Signale ein sinusförmiges Signal ab, welches von der Auswerteeinheit in bestimmte Winkelwerte umgerechnet werden kann. Dadurch kann die maximal erreichbare Auflösung der Vorrichtung von 6° bei Verwendung von 5 Sensorelementen auf der Codespur unter Einbeziehung des Sensorelementes auf der Taktspur nochmals verbessert werden. Das interpolierende Sensorelement ist vorzugsweise der Taktspur zugeordnet, da die Taktspur symmetrisch ausgebildet ist, was einen gleichförmigen Signalverlauf bewirkt.

### Kurzbeschreibung der Zeichnung

Ein Ausführungsbeispiel der erfindungsgemäßen Vorrichtung wird nachfolgend anhand der Figur näher erläutert. Diese zeigt, jeweils schematisch:

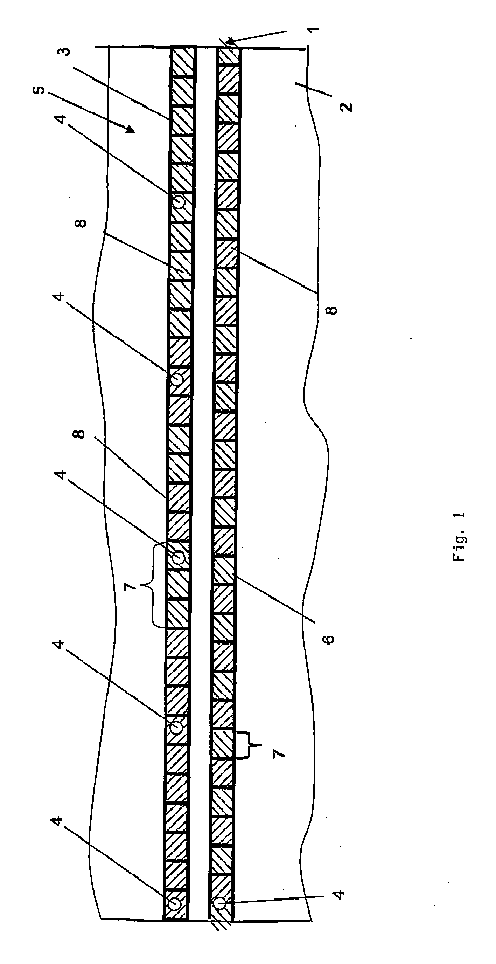

- Fig. 1: die Vorrichtung in abgewickelter Darstellung.

### Ausführung der Erfindung

Figur 1 zeigt eine Vorrichtung zur Bestimmung der Winkelposition 1 eines rotierenden Maschinenelementes 2, hier eine Vorrichtung zur Lenkwinkelmessung für ein Lenkgetriebe. Die Vorrichtung 1 besteht aus einer Codespur 3, die auf dem Maschinenelement 2, beispielsweise der Lenkwelle, haftend angeordnet ist. Die Codespur 3 ist ringförmig ausgebildet und besteht aus einem elastomeren Material, welches mit magnetisierbaren Partikeln versehen ist. Zur Bildung eines Codes wurde das Material in einer Magnetisiermaschine mit einem Muster von benachbarten Nord- und Südpolen verschiedener Länge versehen. Die Schraffuren in der Zeichnung sind dabei so zu verstehen, dass die von rechts oben nach links unten gerichtete Schraffur beispielsweise einen Nordpol repräsentiert und die von links oben nach rechts unten gerichtete Schraffur einen Südpol repräsentiert. Die Codespur 3 wurde so magnetisiert, dass ein auslesbarer Code in Form eines Single-Track-Gray-Codes auf der Codespur 3 vorliegt. Diese mit dem Single-Track-Gray-Code versehene Codespur 3 ist durch einen Sensor auslesbar, welcher fünf Sensorelemente 4 umfasst, die zueinander beabstandet sind und über den Umfang des Maschinenelementes 2 verteilt angeordnet sind. Die Erfassung der Codespur 3 durch fünf Sensorelemente 4 ermöglicht eine maximale Auflösung von 12°. Benachbart zu der Codespur 3 ist auf dem Maschinenelement 2 eine einzige Taktspur 6 angeordnet, welche ebenfalls durch Sensorelemente 4, in dieser Ausgestaltung durch ein einziges Sensorelement 4 auslesbar ist. Einerseits dient die Taktspur 6 der Verbesserung der Messgenauigkeit, andererseits kann die Taktspur 6 und das der Taktspur 6 zugeordnete Sensorelement 4 die Auflösung der Vorrichtung 1 verbessern, da dann in der Vorrichtung 1 insgesamt sechs Sensorelemente 4 zur Verfügung stehen, wodurch sich die Auflösung auf maximal 6° verbessert. Insgesamt sind auf dem Maschinenelement 2 also zwei Spuren vorgesehen, eine Codespur 3 und eine Taktspur 6. Die Taktspur 6 ist ebenfalls ringförmig ausgebildet und besteht aus einem elastomeren Material, welches mit magnetisierbaren Partikeln versehen ist und ebenfalls mit einem Muster benachbarter Nord- und Südpole versehen wurde.

Das Codemusters der Codespur 3 setzt sich aus Codestreifen 7 unterschiedlicher Länge zusammen. Die Codestreifen 7 wiederum setzen sich aus digitalisierbaren Codeelementen 8 gleicher Länge zusammen, wobei die Codeelemente 8 in zwei voneinander unterscheidbaren Zuständen bringbar sind. Bei der magnetisierbaren Codespur 3 entsprechen die beiden unterscheidbaren Zustände jeweils den Nord- und Südpolen, welche in die binären Zahlen 0 und 1 umgesetzt werden. Zur Bildung des Single-Track-Gray-Codes auf der Codespur 3 werden jeweils so viele Codeelemente 8 gleicher Polung zu Codeelementen 8 unterschiedlicher Länge zusammen gesetzt. Die Codeelemente 8 sind wiederum so zueinander angeordnet, dass stets nur ein einziges Sensorelement 4 zur gleichen Zeit einen Pegelwechsel, also einen Wechsel zwischen Nord- und Südpol detektiert. Ein derartiger Single-Track-Gray-Code ermöglicht die Ermittlung eines Absolutwinkels, ohne dass es zuvor einer Verdrehung bedarf. Da bei einer Drehung des Maschinenelementes 1 jeweils nur ein Sensorelement 4 einen Pegelwechsel detektiert, ist das Signal, welches einen bestimmten Winkel repräsentiert auch sehr robust. Die Codestreifen 7 der Taktspur 6 weisen jeweils die gleiche Anzahl von Codeelementen 8 auf und die Codestreifen 7 in einer alternierenden Folge angeordnet sind. Demnach sind bei der Taktspur 6 in wechselnder Folge Nord- und Südpole mit jeweils der gleichen Länge angeordnet. Je ein Nord- oder Südpol bildet ein Codeelement 8. Dabei entspricht die Anzahl der Codeelemente 8 der Codespur 3 der Anzahl der Codeelemente 8 der Taktspur 6. In einer anderen Ausgestaltung kann die Anzahl der Codeelemente 8 der Codespur 3 ein ganzzahliges Vielfaches der Anzahl der Codeelemente 8 der Taktspur 6 sein oder die Anzahl der Codeelemente 8 der Taktspur 6 kann ein ganzzahliges Vielfaches der Anzahl der Codeelemente 8 der Codespur 3 sein. Die Codeelemente 8 der Taktspur 6 sind gegenüber den Codeelementen 8 der Codespur 3 versetzt angeordnet, wobei der Versatz eine halbe Länge eines Codeelementes 8 entspricht.

Alternativ können die Codeelemente 8 der Taktspur 6 nicht versetzt angeordnet sein. Statt dessen kann das Sensorelement 4 der Taktspur 6 um das 0,5-fache, 1,5-fache, 2,5-fache,... der Länge eines Codeelementes 8 gegenüber einem Sensorelement 4 der Codespur 3 versetzt angeordnet sein. Idealerweise wird der Versatz der Sensorelemente 4 der Codespur 3 zu den Sensorelementen 4 der Taktspur 6 und der Versatz der Codespur 3 zur Taktspur 6 so gewählt, dass ein Pegelwechsel auf der Taktspur 6 mittig zwischen Pegelwechsein auf der Codespur 3 liegt.

Des Weiteren weist die Taktspur 6 eine größere Breite auf als die Codespur 3. Die Sensorelemente 4, die der Codespur 3 zugeordnet sind, weisen ein anderes Messprinzip auf als das der Codespur 3 zugeordnete Sensorelement 4. In dieser Ausgestaltung sind die der Codespur 3 zugeordneten Sensorelemente 4 als Single-Hall-Sensor ausgebildet und das der Taktspur 6 zugeordnete Sensorelement 4 als bifferenzen-Hall-Sensor. Des Weiteren sind die Codeelemente 8 der Taktspur 6 so gestaltet, dass ein sinusförmige zueinander phasenverschobene Signale an den zugeordneten Sensorelementen 4 entstehen und die der Taktspur 6 zugeordneten Sensorelemente 4 diese Signale erfassen und zusammen mit den Pegeln der Sensorelemente 4 der Codespur 3 einer interpolierenden Auswerteeinheit zuführen und von dieser Auswerteeinheit so behandelt werden, dass eine Winkelmessung mit einer hohen Auflösung über den gesamten Winkelbereich erreicht wird.

## Patentansprüche

1. Vorrichtung zur Bestimmung der Winkelposition (1) eines rotierenden Maschinenelementes (2), umfassend eine Codespur (3), die dem Maschinenelement (2) zugeordnet ist und durch Sensorelemente (4) auslesbar ist, wobei die Codespur (3) mit einem Codemuster (5) in Form eines Single-Track-Gray-Codes versehen ist, **dadurch gekennzeichnet, dass** dem Maschinenelement (2) eine Taktspur (6) zugeordnet ist, weiche durch Sensorelemente (4) auslesbar ist.

2. Vorrichtung nach Anspruch 1, **dadurch gekennzeichnet, dass** das Codemuster der Codespur (3) aus Codestreifen (7) unterschiedlicher Länge zusammengesetzt ist.

3. Vorrichtung nach Anspruch 1 oder 2, **dadurch gekennzeichnet, dass** sich die Codestreifen (7) der Codespur (3) aus digitalisierbaren Codeelementen (8) gleicher Länge zusammen setzen, wobei die Codeelemente (8) in zwei voneinander unterscheidbaren Zuständen bringbar sind.

4. Vorrichtung nach einem der Ansprüche 1 bis 3, **dadurch gekennzeichnet, dass** die Codestreifen (7) der Taktspur (6) jeweils die gleiche Anzahl von Codeelementen (8) aufweisen und die Codestreifen (7) in einer alternierenden Folge angeordnet sind.

5. Vorrichtung nach einem der Ansprüche 1 bis 4, **dadurch gekennzeichnet, dass** die Anzahl der Codeelemente (8) der Codespur (3) der Anzahl der Codeelemente (8) der Taktspur (6) entspricht oder dass die Anzahl der Codeelemente (8) der Codespur (3) ein ganzzahliges Vielfaches der Anzahl der Codeelemente (8) der Taktspur (6) ist oder dass die Anzahl der Codeelemente (8) der Taktspur (6) ein ganzzahliges Vielfaches der Anzahl der Codeelemente (8) der Codespur (3) ist.

6. Vorrichtung nach einem der Ansprüche 3 bis 5, **dadurch gekennzeichnet, dass** die Codeelemente (8) der Taktspur (6) gegenüber den Codeelementen (8) der Codespur (3) oder dass die der Codespur (3) zugeordneten Sensorelemente (4) gegenüber den der Taktspur (6) zugeordneten Sensorelementen (4) versetzt angeordnet sind.

7. Vorrichtung nach Anspruch 6, **dadurch gekennzeichnet, dass** der Versatz so gewählt ist, dass ein Pegelwechsel an einem Sensorelement (4) der Taktspur (6) in der Mitte zwischen Pegelwerhseln an den Sensorelementen (4) der Codespur (3) erfolgt.

8. Vorrichtung nach einem der Ansprüche 1 bis 7, **dadurch gekennzeichnet, dass** die Taktspur (6) eine größere Breite aufweist als die Codespur (3).

9. Vorrichtung nach einem der Ansprüche 1 bis 8, **dadurch gekennzeichnet, dass** zum Auslesen der Codespur (3) und der Taktspur (6) jeweils ein Sensor mit Sensorelementen (4) vorgesehen ist, wobei der Sensor der der Codespur (3) zugeordnet ist, mehrere Sensorelemente (4) umfasst.

10. Vorrichtung nach Anspruch 9, **dadurch gekennzeichnet, dass** die der Taktspur (6) zugeordneten Sensorelemente (4) ein anderes Messprinzip aufweisen als das der Codespur (3) zugeordnete Sensorelement (4).

11. Vorrichtung nach Anspruch 9 oder 10, **dadurch gekennzeichnet, dass** die Codeelemente (8) der Taktspur (6) so gestaltet sind, dass sinusförmig zueinander phasenverschobene Signale an den zugeordneten Sensorelementen (4) entstehen und von diesen erfassbar sind.
